# EUROPEAN PATENT SPECIFICATION

(11) **EP 3 128 778 B1**
(45) Date of publication and mention of the grant of the patent: **23.06.2021**
(21) Application number: 14888239.2
(22) Date of filing: 21.07.2014
(51) Int. Cl.: H04W 16/14, H04L 12/24, H04L 12/26, H04W 16/10, H04W 72/12

(54) **NETWORK SHARING METHOD, APPARATUS AND COMPUTER STORAGE MEDIUM**
VERFAHREN ZUR GEMEINSAMEN NETZWERKNUTZUNG, VORRICHTUNG UND COMPUTERSPEICHERMEDIUM
PROCÉDÉ ET APPAREIL DE PARTAGE DE RÉSEAU, ET SUPPORT DE STOCKAGE INFORMATIQUE

(30) Priority: 03.04.2014 CN 201410131922
(43) Date of publication of application: 08.02.2017
(73) Proprietor: ZTE Corporation, Shenzhen City, Guangdong Province 518057 (CN)
(72) Inventor: XU, Qianqian, Shenzhen Guangdong 518057 (CN)
(74) Representative: Ligi, Stefano
(86) International application number: PCT/CN2014/082634
(87) International publication number: WO 2015/149451

(56) References cited:
- EP-A1- 2 552 158
- EP-A2- 2 073 583
- WO-A1-2013/184968
- CN-A- 101 267 651
- CN-A- 101 489 229
- CN-A- 101 674 602
- CN-A- 101 990 250

## Description

### TECHNICAL FIELD

The disclosure relates to the field of mobile communications, and in particular to a network sharing method, apparatus and system, and a computer storage medium in the field of Long Time Evolution (LTE).

### BACKGROUND

In order to reduce investment and operation costs, operators may achieve network sharing, also called as frequency band reuse, through cooperation during networking. Network sharing refers to sharing of a base station by a plurality of operators or combined networking. That is, a communication network constituted by one or more base stations allows access of users of a plurality of operators, a bandwidth occupation criterion of each operator being determined by negotiation between the operators.

In an LTE system, there are 20MHz spectral bandwidth resources, including 100 Resource Blocks (RBs). Operators may negotiate occupation situations of these resources, a base station allocates these resources according to service demands of users and criteria agreed between the operators, and each user may occupy an integral number of RBs.

Although frequency band sharing solutions exist in the prior art, these solutions are based on a condition where an operator bandwidth and carrier frequency are fixed, flexible scheduling cannot be achieved under conditions that excessive network resources are occupied by a certain operator whereas other operators have insufficient resources, and accordingly, the utilization rate of spectrum resources cannot be improved.

WO2013184968A1 discloses a networked computing system having self-organizing network (SON) capabilities.

EP2073583A2 discloses a spectrum-assignment method for use in a wireless communication system, the system comprising at least first and second communication apparatuses each having a portion of communication spectrum pre-assigned to it for communication, the method comprising: on a dynamic basis, controlling re-assignments of said spectrum between the first and second communication apparatus in dependence upon spectrum requirements of those apparatuses and at least one indicator indicative of interference expected to result from such reassignments, so as to tend to improve spectrum utilization between the first and second communication apparatuses.

EP2552158A1 discloses a resource control method and device. The method includes: a base station collecting in real time an S1 transmission bandwidth occupied by one or more operators in the base station. When a user equipment (UE) initiates a service request, according to the remaining S1 transmission bandwidth of the operator to which the UE belongs, the base station determines whether the UE is allowed to access to the service or not. The S1 transmission bandwidth resource occupied by each operator in the system one is collected in real time.

### SUMMARY

In view of this, the embodiments of the disclosure are intended to provide a network sharing method, apparatus and system, and a computer storage medium, which enable a plurality of operators to flexibly share a network by means of scheduling without specific frequency bands being allocated fixedly.

The features of the methods and devices according to the present disclosure are defined in the independent claims, and the preferable features according to the present invention are defined in the dependent claims.

To solve the technical problem, the embodiments of the disclosure adopt the technical solutions as follows.

The invention is defined by the independent claims. The subject matter in the description, page 6, lines 8-23 is according to the invention as defined in the claims. The rest of the description and the figures are not according to the invention and are presented for illustration purposes only.

The method, apparatus and system or the computer storage medium provided by the embodiments of the disclosure meet network sharing demands of a plurality of operators, improve the utilization rate of spectrum resources, and further reduces the investment costs of the operators, thereby more meeting future demands for multi-operator mixed scheduling.

### BRIEF DESCRIPTION OF THE DRAWINGS

Fig. 1 is a flowchart of a network sharing method according to an embodiment of the disclosure;
Fig. 2 is a flowchart of a network sharing method according to an embodiment of the disclosure;
Fig. 3 is a structural diagram of a network sharing apparatus according to an embodiment of the disclosure;
Fig. 4 is a structural diagram of another network sharing apparatus according to an embodiment of the disclosure;
Fig. 5 is a structural diagram of a network sharing system according to an embodiment of the disclosure;
Fig. 6 is a structural diagram of another network sharing system according to an embodiment of the disclosure; and
Fig. 7 is a structural diagram of another network sharing apparatus according to an embodiment of the disclosure.

### DETAILED DESCRIPTION

Preferred embodiments of the disclosure are elaborated below in conjunction with the drawings. It will be appreciated that the preferred embodiments elaborated below are only used to elaborate and explain the disclosure, and do not limit the disclosure.

The embodiments of the disclosure provide a network sharing method, apparatus and system. Resources are scheduled according to information about operators to which access users belong, requested service information, bandwidth occupation information negotiated by a plurality of operators and service sequencing information about operators, thereby achieving network sharing.

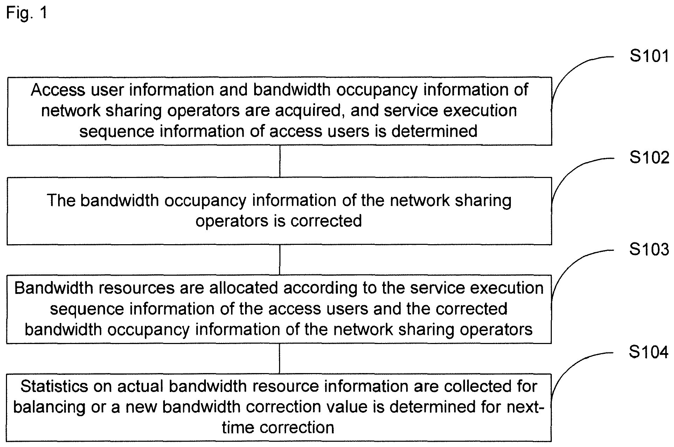

According to a first aspect of an embodiment of the disclosure, a network sharing method is disclosed. As shown in Fig. 1, the method includes the steps as follows.

Step S101: Access user information and bandwidth occupancy information of network sharing operators are acquired, and service execution sequence information of access users is determined. Here, the step that the service execution sequence information of the access users is determined may specifically refer to that: the service execution sequence information of the access users is determined according to the access user information.

Step S102: The bandwidth occupancy information of the network sharing operators is corrected.

Step S103: Bandwidth resources are allocated according to the service execution sequence information of the access users and the corrected bandwidth occupancy information of the network sharing operators.

Step S104: Statistics on actual bandwidth resource information are collected for balancing or a new bandwidth correction value is determined for next-time correction. The step that statistics on the actual bandwidth resource information are collected for balancing includes that: statistics on the actual bandwidth resource information are collected, and service balancing is performed between base stations according to the statistical actual bandwidth resource information.

The bandwidth correction value determined in Step S104 is for use in correction of the bandwidth occupancy information of the network sharing operators during next execution of Step S102.

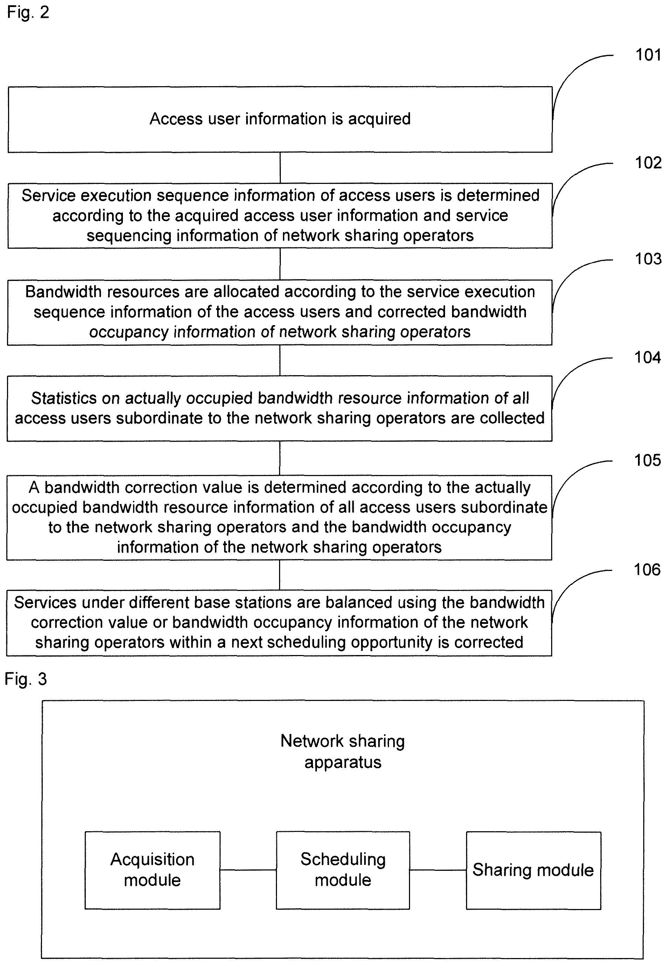

As shown in Fig. 2, the network sharing method disclosed by the embodiment of the disclosure specifically includes the steps as follows.

Step 101: Access user information is acquired.

Step 102: Service execution sequence information of access users is determined according to the acquired access user information and service sequencing information of network sharing operators.

Step 103: Bandwidth resources are allocated according to the service execution sequence information of the access users and corrected bandwidth occupancy information of the network sharing operators.

Step 104: Statistics on actually occupied bandwidth resource information of all access users subordinate to the network sharing operators are collected.

Step 105: A bandwidth correction value is determined according to the actually occupied bandwidth resource information of all access users subordinate to the network sharing operators and the bandwidth occupancy information of the network sharing operators.

Step 106: Services under different base stations are balanced using the bandwidth correction value or bandwidth occupancy information of the network sharing operators within a next scheduling opportunity is corrected.

Herein, the access user information includes access user requested service information and attached operator information; the access user requested service information refers to attribute information of requested services, including a service delay, a service Allocation and Retention Priority (ARP) and a service priority such as a priority between various Guaranteed Bit Rate (GBR) services and NonGBR services; and the attached operator information of access users refers to information of operators to which the access users belong.

The service sequencing information of the network sharing operators refers to information about sequencing of services of terminal users accessing networks of operators by the operators according to attributes of requested services thereof, and the operators may configure different pieces of service sequencing information in different base stations according to service requirements thereof. If a plurality of network sharing operators selects the same service sequencing policy, all access users of different operators may be sequenced in a unified manner during scheduling. Otherwise, the access users of different operators may be put into different user queues during scheduling and sequenced separately.

The operator bandwidth occupation information mainly includes a bandwidth occupation proportion and a bandwidth correction value.

The bandwidth occupation proportion represents a full-bandwidth occupation proportion of each operator, and further includes a proportion of bandwidths which may be co-occupied by all operators. For example, two operators share a base station, a bandwidth occupation proportion of an operator A is 50%, a bandwidth occupation proportion of an operator B is 30%, a bandwidth co-occupation proportion is 20%, and the operator A may occupy 20*(50%+20%)=14MHz of a 20MHz frequency band. For 70 RBs in an LTE system, the bandwidth occupation proportion only represents the size of a bandwidth, and does not represent the position of a frequency band to which the bandwidth is attached.

The bandwidth correction value contains two levels of information. The bandwidth correction value firstly indicates whether remaining bandwidth resources, which are obtained after bandwidths of a certain operator are not completely allocated within a certain scheduling opportunity, are allowed to be used by other operators, herein from a perspective of improving the utilization rate of cell spectrum resources (average use resources for cell scheduling / total cell bandwidth resources), it is certainly intended that all the resources are utilized, but it is necessary to take demands of operators into consideration. The bandwidth correction value further refers to a difference between bandwidth resources actually occupied by a certain operator and an upper limit of available bandwidths under the condition that remaining bandwidth resources are allowed to be mutually occupied among operators. The bandwidth correction value may be regarded as 0 under the condition that other operators are not allowed to occupy the remaining resources. Under the condition that resources of a certain operator are not completely used and other operators are allowed to occupy remaining resources, the bandwidth correction value is a difference between bandwidth resources actually occupied by a certain operator and an upper limit of available bandwidths.

According to another aspect of the embodiment of the disclosure, a network sharing apparatus is also disclosed. The apparatus includes an acquisition module, a sharing module and a scheduling module.

The acquisition module is configured to acquire access user information and bandwidth occupancy information of network sharing operators, and determine service execution sequence information of access users. Here, the service execution sequence information of the access users is determined according to the acquired access user information.

The sharing module is configured to correct the bandwidth occupancy information of the network sharing operators.

The scheduling module is configured to allocate bandwidth resources according to the service execution sequence information of access users and the corrected bandwidth occupancy information of the network sharing operators, and collect statistics on actual bandwidth resource information for balancing or determine a new bandwidth correction value. If operators are not allowed to mutually occupy remaining resources in a bandwidth occupation criterion, it is unnecessary to calculate the bandwidth correction value here.

Here, the scheduling module is specifically configured to collect statistics on the actual bandwidth resource information and perform service balancing between base stations according to the statistical actual bandwidth resource information when being configured to collect statistics on the actual bandwidth resource information for balancing.

Herein, the new bandwidth correction value is for use in next correction of the bandwidth occupancy information of the network sharing operators.

The sharing module may be embedded into the scheduling module to become a sharing sub-module.

Meanwhile, an embodiment of the disclosure also discloses a network sharing system, which includes a base station and a sharing apparatus. The base station includes an acquisition module and a scheduling module, and the sharing apparatus is configured to correct bandwidth occupancy information of the network sharing operators and perform balancing as well.

The sharing apparatus is specifically configured to correct the bandwidth occupancy information of the network sharing operators and perform service balancing between base stations according to the statistical actual bandwidth resource information as well.

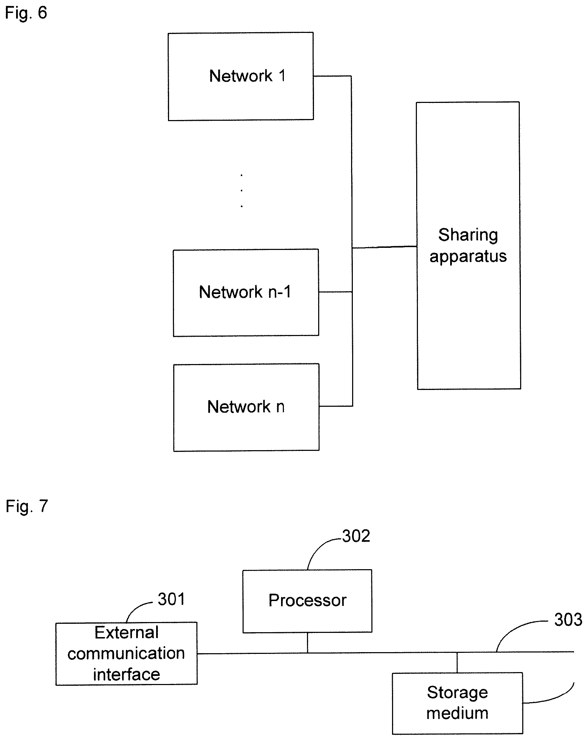

A specific structure of the network sharing apparatus may be shown in Fig. 7. The apparatus includes a processor 302, a storage medium 304 and at least one external communication interface 301, herein the processor 302, the storage medium 304 and the external communication interface 301 are connected via a bus 303. The processor 302 may be an electronic component having a processing function such as a micro processor unit, a central processing unit, a digital signal processor or a programmable logic array.

A computer executable instruction is stored on the storage medium 304. The processor 302 executes the computer executable instruction stored in the storage medium 304, and may implement the steps as follows.

Access user information and bandwidth occupancy information of network sharing operators are acquired, and service execution sequence information of the access users is determined.

The bandwidth occupancy information of the network sharing operators is corrected.

Bandwidth resources are allocated according to the service execution sequence information of the access users and the corrected bandwidth occupancy information of the network sharing operators.

Statistics on actual bandwidth resource information are collected, and service balancing is performed between base stations according to the statistical actual bandwidth resource information, or a new bandwidth correction value is determined to be used in next correction of the bandwidth occupancy information of the network sharing operators.

An embodiment of the disclosure also provides a storage medium. A computer executable instruction is stored in the computer storage medium. The computer executable instruction is configured to execute at least one of the network sharing methods according to the embodiment of the disclosure.

The storage medium may be a magnetic tape, a Digital Video Disk (DVD), an optical disk, a mobile hard disk, a U disk or other storage media, specifically. The storage medium is a non-instantaneous storage medium, preferably.

The technical solutions of the disclosure are elaborated below by means of specific embodiments in conjunction with the drawings.

### Embodiment 1:

Two operators share a base station, the two operators share 100 RB 20MHz network bandwidth resources, a bandwidth occupation proportion of an operator A is 50%, a bandwidth occupation proportion of an operator B is 30%, and a bandwidth co-occupation proportion is 20%; the operators are allowed to mutually occupy remaining resources which are not used by other operators; and service sequencing policies of the operators are the same. A bandwidth correction value of the operator A is initialized as Δ*_{A}* =0.

The steps of a network sharing method are elaborated on the basis of the above information.

Step 201: A base station acquires attached operator information of access users and requested service information. Three users access an operator A, namely a user (UE ID=1) accesses a NonGBR service, a user (UE ID=2) accesses a NonGBR service, and a user (UE ID=3) accesses a GBR service. Two users access an operator B, namely a user (UE ID=4) accesses a GBR service, and a user (UE ID=5) accesses a NonGBR service.

Step 202: The base station determines service execution sequence information of access users. Because the service sequencing policies of the operators are the same, access users of the two operators queue together. According to a service priority guaranteed level, service levels of the user (UE ID=3) and the user (UE ID=4) are the same, and the users are sequenced together, herein a sequencing result may be: UE ID=4 → UE ID=3. Service levels of the user (UE ID=1), the user (UE ID=2) and the user (UE ID=5) are the same, and the users are sequenced together, herein a sequencing result may be: UE ID=2 → UE ID=5 → UE ID=1.

Step 203: The base station corrects network sharing operator bandwidth occupation information. Two operators only need a bandwidth correction value, the bandwidth correction value of the operator A is initialized as Δ*_{A}* = 0, and correction is unnecessary. An upper bandwidth allocation limit of the operator A is: 100*(50%+20%)=70 RBs, and an upper bandwidth allocation limit of the operator B is: 100*(30%+20%)=50 RBs. In this case, allocated bandwidths of the operator A are within a range of [50, 70], and allocated bandwidths of the operator B are within a range of [30, 50]. The upper bandwidth allocation limit is a maximum bandwidth value which may be occupied theoretically by each operator, so a sum of the upper limits may exceed 100 RBs which may be provided by a system.

Thus, within a current scheduling opportunity, an available upper bandwidth limit of the operator A is 70 RBs, and an available upper bandwidth limit of the operator B is 50 RBs.

Step 204: The base station allocates resources to users in a sequencing queue. The resources are sequentially allocated according to bandwidth occupation information such as the available upper bandwidth limits of the operators and service execution sequence information of the access users in accordance with a sequencing queue result. The resources are allocated to a GBR service queue and then allocated to a NonGBR service queue.
5 RBs may be allocated to the user (UE ID=4);
25 RBs may be allocated to the user (UE ID=3);
30 RBs may be allocated to the user (UE ID=2);
15 RBs may be allocated to the user (UE ID=5); and
25 RBs may be allocated to the user (UE ID=1).

100 RB resources have been completely allocated or ending time of this scheduling opportunity is up, and the subsequent steps are executed.

Step 205: The base station collects, according to a resource allocation result, statistics on a sum of actually occupied bandwidths of all access users of each operator. The operator A actually occupies 80 RBs of a bandwidth, and the operator B actually occupies 20 RBs of the bandwidth.

Step 206: The base station calculates, according to the actually occupied bandwidths and available upper bandwidth limits of the operators, a bandwidth correction value. The operator A actually occupies 80 RBs of the bandwidth, which exceed the available upper bandwidth limit thereof by 10 RBs, so that the bandwidth correction value is Δ*_{A}* = 70 - 80 = -10.

Within a next scheduling opportunity, Steps 201-206 are repeated using the acquired information.

### Embodiment 2:

Two operators share a base station, the two operators share 100 RB 20MHz network bandwidth resources, a bandwidth occupation proportion of an operator A is 50%, a bandwidth occupation proportion of an operator B is 30%, and a bandwidth co-occupation proportion is 20%; and the operators are allowed to mutually occupy remaining resources which are not used by other operators. The two operators adopt the same service sequencing policy. A bandwidth correction value of a previous scheduling opportunity is Δ*_{A,n}* =-10.

The steps of a network sharing method are elaborated on the basis of the above information.

Step 301: A base station acquires attached operator information of access users and requested service information. Three users access an operator A, namely a user (UE ID=1) accesses a NonGBR service, a user (UE ID=2) accesses a NonGBR service, and a user (UE ID=3) accesses a GBR service. Two users access an operator B, namely a user (UE ID=4) accesses a GBR service, and a user (UE ID=5) accesses a NonGBR service.

Step 302: The base station determines service execution sequence information of access users. Because the service sequencing policies of the two operators are the same, access users of the two operators queue together. According to a service priority guaranteed level, service levels of the user (UE ID=3) and the user (UE ID=4) are the same, and the users are sequenced together, herein a sequencing result may be: UE ID=3 → UE ID=4. Service levels of the user (UE ID=1), the user (UE ID=2) and the user (UE ID=5) are the same, and the users are sequenced together, herein a sequencing result may be: UE ID=5 → UE ID=1 → UE ID=2.

Step 303: The base station corrects network sharing operator bandwidth occupation information. Because a bandwidth correction value is Δ*_{A-n}* = -10, it is shown that the operator A fully occupies bandwidths which may be co-occupied within the previous scheduling opportunity and the operator A cannot re-occupy the bandwidths which may be co-occupied within a current scheduling opportunity. Allocated bandwidths of the operator A are within a range of [50, 70], and allocated bandwidths of the operator B are within a range of [30, 50]. Thus, an available upper bandwidth limit of the operator A is: a sum of a lower bandwidth allocation limit thereof and the bandwidth correction value, namely 50-10=40 RBs. An available upper bandwidth limit of the operator B is: a value acquired by subtracting an upper bandwidth occupation limit of the operator A from a full bandwidth, namely 100-40=60 RBs.

In this case, a mode of occupying the bandwidths which may be co-occupied is adjusted, so a sum of the available upper bandwidth limits of all operators is 100 RBs.

Step 304: The base station allocates resources to users in a sequencing queue. The resources are sequentially allocated according to bandwidth occupation information such as the available upper bandwidth limits and service execution sequence information of the access users in accordance with a sequencing queue result. The resources are allocated to a GBR service queue and then allocated to a NonGBR service queue.
5 RBs may be allocated to the user (UE ID=3);
20 RBs may be allocated to the user (UE ID=4);
45 RBs may be allocated to the user (UE ID=5);
20 RBs may be allocated to the user (UE ID=1); and
10 RBs may be allocated to the user (UE ID=2).

100 RB resources have been completely allocated or ending time of this scheduling opportunity is up, and the subsequent steps are executed.

Step 305: The base station collects, according to a resource allocation result, statistics on a sum of actually occupied bandwidths of all access users of each operator. The operator A actually occupies 35 RBs of a bandwidth, and the operator B actually occupies 65 RBs of the bandwidth.

Step 306: The base station calculates, according to the actually occupied bandwidths and available upper bandwidth limits of the operators, a bandwidth correction value. The operator A actually occupies 35 RBs of the bandwidth, which are lower than the available upper bandwidth limit thereof by 5 RBs (the available upper bandwidth limit of the operator is 40 RBs), so that the bandwidth correction value is Δ_{*A,n*+1} = 40 - 35 = 5

Within a next scheduling opportunity, Steps 301-306 are repeated using the acquired information.

### Embodiment 3:

Two operators share a base station, the two operators share 100 RB 20MHz network bandwidth resources, a bandwidth occupation proportion of an operator A is 50%, a bandwidth occupation proportion of an operator B is 30%, and a bandwidth co-occupation proportion is 20%. The operators are allowed to mutually occupy remaining resources. Service sequencing policies of the operators are the same. A bandwidth correction value of a previous scheduling opportunity is Δ*_{A,n}* = 5.

The steps of a network sharing method are elaborated on the basis of the above information.

Step 401: A base station acquires attached operator information of access users and requested service information. Three users access an operator A, namely a user (UE ID=1) accesses a NonGBR service, a user (UE ID=2) accesses a NonGBR service, and a user (UE ID=3) accesses a GBR service. Two users access an operator B, namely a user (UE ID=4) accesses a GBR service, and a user (UE ID=5) accesses a NonGBR service.

Step 402: The base station determines service execution sequence information of access users. Because the service sequencing policies of the two operators are the same, access users of the two operators queue together. According to a service priority guaranteed level, service levels of the user (UE ID=3) and the user (UE ID=4) are the same, and the users are sequenced together, herein a sequencing result may be: UE ID=4 → UE ID=3. Service levels of the user (UE ID=1), the user (UE ID=2) and the user (UE ID=5) are the same, and the users are sequenced together, herein a sequencing result may be: UE ID=1 → UE ID=2 → UE ID=5.

Step 403: The base station initializes bandwidth correction. Allocated bandwidths of the operator A are within a range of [50, 70], and allocated bandwidths of the operator B are within a range of [30, 50]. Because a bandwidth correction value is Δ*_{A,n}* = 5, an available upper bandwidth limit of the operator A within a current scheduling opportunity is: a sum of an upper bandwidth allocation limit thereof and the bandwidth correction value, namely 70+5=75 RBs. An available upper bandwidth limit of the operator B is: a value acquired by subtracting an upper bandwidth occupation limit of the operator A from a full bandwidth, namely 100-75=25 RBs.

Step 404: The base station allocates resources to users in a sequencing queue. The base station allocates the resources sequentially according to bandwidth occupation information such as the available upper bandwidth limits and service execution sequence information of the access users in accordance with a sequencing queue result. The resources are allocated to a GBR service queue and then allocated to a NonGBR service queue.
20 RBs may be allocated to the user (UE ID=3);
10 RBs may be allocated to the user (UE ID=4);
15 RBs may be allocated to the user (UE ID=5);
35 RBs may be allocated to the user (UE ID=1); and
20 RBs may be allocated to the user (UE ID=2).

100 RB resources have been completely allocated or ending time of this scheduling opportunity is up, and the subsequent steps are executed.

Step 405: The base station collects, according to a resource allocation result, statistics on a sum of actually occupied bandwidths of all access users of each operator. The operator A actually occupies 75 RBs of a bandwidth, and the operator B actually occupies 25 RBs of the bandwidth.

Step 406: The base station calculates, according to the actually occupied bandwidths and available upper bandwidth limits of the operators, a bandwidth correction value. The operator A actually occupies 75 RBs of the bandwidth, and the available upper bandwidth limit thereof is also 75 RBs, so that the bandwidth correction value is Δ_{*A,n*+1} = Δ*_{A,n}* -5=0.

Within a next scheduling opportunity, Steps 401-406 are repeated using the acquired information.

### Embodiment 4:

Three operators share a base station, the three operators share 100 RB 20MHz network bandwidth resources, a bandwidth occupation proportion of an operator A is 30%, a bandwidth occupation proportion of an operator B is 30%, and a bandwidth occupation proportion of an operator C is 40%. The operators are not allowed to mutually occupy remaining resources. Service sequencing policies of the operators are different.

The steps of a network sharing method are elaborated on the basis of the above information.

Step 501: A base station acquires attached operator information of access users and requested service information. Two users access an operator A, namely a user (UE ID=1) accesses a NonGBR service, and a user (UE ID=2) accesses a GBR service. Three users access an operator B, namely a user (UE ID=3) accesses a NonGBR service, a user (UE ID=4) accesses a NonGBR service, and a user (UE ID=5) accesses a GBR service. Two users access an operator C, namely a user (UE ID=6) accesses a NonGBR service, and a user (UE ID=7) accesses a GBR service.

Step 502: The base station determines an access user queuing sequence. Because the service sequencing policies of the operators are different, access users of the three operators queue separately. According to a service priority guaranteed level, a user sequencing result of the operator A may be: UE ID=2 → UE ID=1. A user sequencing result of the operator B may be: UE ID=5 → UE ID=4 → UE ID=3. A user sequencing result of the operator C may be: UE ID=7 → UE ID=6.

Step 503: The base station initializes bandwidth correction. An upper bandwidth allocation limit of the operator A is: 100*30%=30 RBs, an upper bandwidth allocation limit of the operator B is: 100*30%=30 RBs, and an upper bandwidth allocation limit of the operator C is: 100*40%=40 RBs. In this case, an attached bandwidth of the operator A is 30 RBs, an attached bandwidth of the operator B is 30 RBs, and an attached bandwidth of the operator C is 40 RBs.

The operators A, B and C are not allowed to mutually occupy remaining resources without a bandwidth correction value. The available upper bandwidth limit of each operator is the same as the upper bandwidth allocation limit.

Step 504: The base station allocates resources to users in a sequencing queue. The resources are sequentially allocated according to bandwidth occupation information such as the available upper bandwidth limits and service execution sequence information of the access users in accordance with a sequencing queue result. The resources are allocated to a GBR service queue and then allocated to a NonGBR service queue.
Operator A:
   10 RBs may be allocated to the user (UE ID=2); and
   20 RBs may be allocated to the user (UE ID=1).
Operator B:
   5 RBs may be allocated to the user (UE ID=5);
   15 RBs may be allocated to the user (UE ID=4); and
   10 RBs may be allocated to the user (UE ID=3).
Operator C:
   10 RBs may be allocated to the user (UE ID=7); and
   20 RBs may be allocated to the user (UE ID=6).

100 RB resources have been completely allocated or ending time of this scheduling opportunity is up, and the subsequent steps are executed.

Step 505: The base station collects, according to a resource allocation result, statistics on a sum of actually occupied bandwidths of all access users of each operator. The operator A occupies 30 RBs of a bandwidth, the operator B occupies 30 RBs of the bandwidth, and the operator C occupies 40 RBs of the bandwidth. A bandwidth occupation criterion specifies: no allowance of mutual occupation of remaining resources, so 10 remaining RBs of the operator C cannot be used by the operators A and B, and it is unnecessary to calculate a bandwidth correction value.

Step 506: The base station calculates, according to the actually occupied bandwidths and available upper bandwidth limits of the operators, a bandwidth correction value. The bandwidth occupation criterion specifies: no allowance of mutual occupation of remaining resources, so 10 remaining RBs of the operator C cannot be used by the operators A and B, and it is unnecessary to calculate a bandwidth correction value.

Within a next scheduling opportunity, Steps 501-506 are repeated using the acquired information.

Embodiment 5: a network sharing apparatus. As shown in Fig. 3, the apparatus includes:
an acquisition module configured to acquire access user information and bandwidth occupancy information of network sharing operators, and determine service execution sequence information of access users;
a sharing module configured to correct the bandwidth occupancy information of the network sharing operators; and
a scheduling module is configured to allocate bandwidth resources according to the service execution sequence information of the access users and the corrected bandwidth occupancy information of the network sharing operators, and collect statistics on actual bandwidth resource information for balancing or determine a new bandwidth correction value.

If operators are not allowed to mutually occupy remaining resources in a bandwidth occupation criterion, it is unnecessary to calculate the bandwidth correction value here.

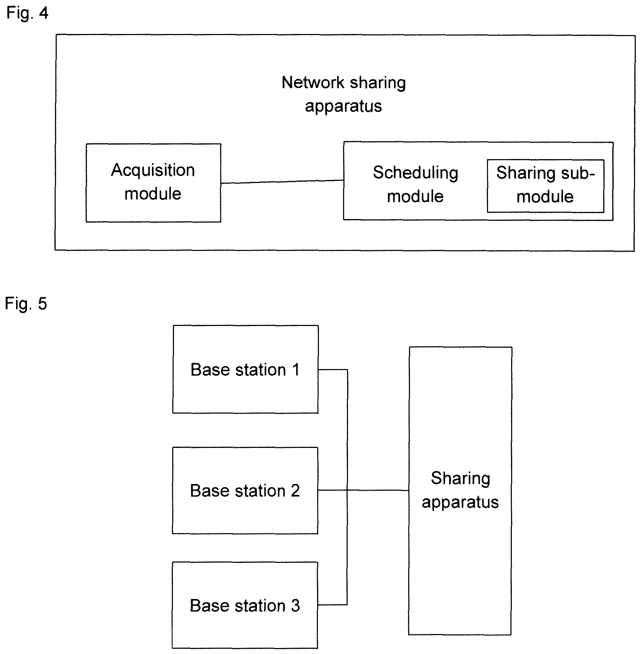

As shown in Fig. 4, the sharing module may be embedded into the scheduling module to become a sharing sub-module.

Embodiment 6, as shown in Fig. 5,
two operators perform combined networking, and share three base stations under a network. A bandwidth occupation proportion of an operator A is 50%, and a bandwidth occupation proportion of an operator B is 50%. The operators are allowed to mutually occupy remaining resources. A bandwidth correction value is 0.

The steps of a network sharing method are elaborated on the basis of the above information.

Step 601: A sharing apparatus determines access user queuing sequence information according to attached operator information of access users, requested service information and an operator sequencing policy.

Step 602: The sharing apparatus initializes bandwidth correction. Two operators only need a bandwidth correction value, and the bandwidth correction value of the operator A is initialized as Δ*_{A}* = 0. An upper bandwidth allocation limit of the operator A in each base station is: 100*50%=50 RBs, an upper bandwidth allocation limit of the operator B is: 100*50%=50 RBs, an allocated bandwidth of the operator A is 50 RBs, and an allocated bandwidth of the operator B is 50 RBs. Available upper bandwidth limits of the operators within a current scheduling opportunity are corrected according to the bandwidth correction value. Because the bandwidth correction value is 0, an available upper bandwidth limit of the operator A within the current scheduling opportunity is 50 RBs, and an available upper bandwidth limit of the operator of the operator B is 50 RBs.

Step 603: The base stations allocate resources according to bandwidth occupation information such as the available upper bandwidth limits of the operators and access user queuing sequence information.

Step 604: The base stations collect, according to a resource allocation result, statistics on a sum of actually occupied bandwidths of all access users of each operator.
Base station 1: 60 RBs may be allocated to a user of an operator 1; and
   20 RBs may be allocated to a user of an operator 2.
Base station 2: 70 RBs may be allocated to a user of an operator 1; and
   30 RBs may be allocated to a user of an operator 2.
Base station 3: 50 RBs may be allocated to a user of an operator 1; and
   40 RBs may be allocated to a user of an operator 2.

An average resource occupation rate of the operator 1 is (60+70+50)/3/100=60%, and an average resource occupation rate of the operator 2 is (20+30+40)/3/100=30%.

Step 605: The base stations calculate, according to actually occupied bandwidths and available bandwidths of the operators, a bandwidth correction value. The actually occupied bandwidth of the operator A is 60%, which exceeds an available upper bandwidth proportion limit thereof by 10% (an available bandwidth proportion of the operator is 50%), so the bandwidth correction value is Δ*_{A}* = -10%.

Step 606: The sharing apparatus balance different base station services. The apparatus searches for a base station: the base station 2 where the operator 1 occupies most resources in the whole network. Resources of the base station 2 are completely occupied, it is shown that service demands of the base station 2 are most, and it is necessary to balance services of the base station 2 to other base stations. The apparatus searches for a base station: the base station 3 where the operator 1 occupies least resources in the whole network. The resource occupation rate is 50%, and has reached the bandwidth occupation proportion, it is shown that service demands of the operator 1 in the whole network are large, each base station meets an occupation proportion, services of the operator 1 are not balanced, and services of the operator 2 in the base station 2 are balanced instead. The apparatus searches for a base station: the base station 1 where the operator 2 occupies least resources in the whole network. The resource occupation rate is 20%, and services of the operator 2 in the base station 2 are balanced to the base station 1.

The number of the base stations here may be set as a random number according to a specific situation.

Embodiment 7: Fig. 6 shows a system for sharing a network by a plurality of operators. There may be one or more networks shown in Fig. 6. n shown in Fig. 6 is an integer greater than 1, herein a network n may represent an n^{th} network; and a network n-1 may represent an n-1^{th} network. The network sharing system may be configured to execute the steps as follows.

Step 701: A sharing apparatus determines service execution sequence information of access users by acquiring attached operator information of access users and requested service information, determines network sharing operator bandwidth occupation information and initializes bandwidth correction.

Step 702: Each base station in a network schedules users subordinate to each operator under the base station according to bandwidth occupation information such as an available upper bandwidth occupation limit and the service execution sequence information of the access users.

Step 703: Each base station in the network collects statistics on bandwidths actually occupied by each operator, and informs a network sharing apparatus.

Step 704: The sharing apparatus acquires the bandwidths actually occupied by each operator under each base station, and corrects an upper bandwidth occupation limit of each operator in each base station during next-time scheduling according to an operator bandwidth occupation criterion.

Step 705: The sharing apparatus informs each base station in the network of an upper operator bandwidth occupation limit correction result.

## Claims

1. A network sharing method, comprising:
acquiring access user information and bandwidth occupancy information of network sharing operators, and determining service execution sequence information of access users according to the access user information (S101), the access user information comprising access user requested service information and attached operator information, the access user requested service information referring to attribute information of requested services, including a service delay, a service Allocation and Retention Priority, ARP, and a service priority;
correcting the bandwidth occupancy information of the network sharing operators using a bandwidth correction value of a previous scheduling opportunity (S102), wherein the bandwidth correction value contains two levels of information, a first information that indicates whether remaining bandwidth resources, which are obtained after bandwidths of a certain operator are not completely allocated in the previous scheduling opportunity within a certain scheduling opportunity, are allowed to be used by other operators; and a second information that refers a difference between bandwidth resources actually occupied by a certain operator and an upper limit of available bandwidths of the certain operator under the condition that remaining bandwidth resources are allowed to be mutually occupied among operators;
allocating bandwidth resources according to the service execution sequence information of the access users and the corrected bandwidth occupancy information of the network sharing operators (S103); and
collecting statistics on actual bandwidth resource information, and performing service balancing between base stations according to the statistical actual bandwidth resource information, or determining a new bandwidth correction value for correction of the bandwidth occupancy information of the network sharing operators within a next scheduling opportunity (S104).

2. The method according to claim 1, wherein acquiring the access user information refers to acquiring attached operator information of the access users and requested service information.

3. The method according to claim 2, wherein determining the service execution sequence information of the access users specifically refers to determining the service execution sequence information of the access users according to the acquired access user information and service execution sequencing information of the network sharing operators.

4. The method according to claim 1, wherein determining the new bandwidth correction value comprises:
collecting statistics on actually occupied bandwidth resource information of all access users subordinate to the network sharing operators; and
determining a bandwidth correction value according to the actually occupied bandwidth resource information of all access users subordinate to the network sharing operators and the bandwidth occupancy information of the network sharing operators.

5. The method according to claim 1, wherein the bandwidth occupation information is a bandwidth occupation value or a bandwidth occupation proportion.

6. A network sharing apparatus, comprising:
an acquisition module configured to acquire access user information and bandwidth occupancy information of network sharing operators, and determine service execution sequence information of access users according to the access user information, the access user information comprising access user requested service information and attached operator information, the access user requested service information referring to attribute information of requested services, including a service delay, a service Allocation and Retention Priority, ARP, and a service priority;
a sharing module configured to correct the bandwidth occupancy information of the network sharing operators using a bandwidth correction value of a previous scheduling opportunity, wherein the bandwidth correction value contains two levels of information, a first information that indicates whether remaining bandwidth resources, which are obtained after bandwidths of a certain operator are not completely allocated in the previous scheduling opportunity within a certain scheduling opportunity, are allowed to be used by other operators; and a second information that refers a difference between bandwidth resources actually occupied by a certain operator and an upper limit of available bandwidths of the certain operator under the condition that remaining bandwidth resources are allowed to be mutually occupied among operators; and
a scheduling module configured to allocate bandwidth resources according to the service execution sequence information of the access users and the corrected bandwidth occupancy information of the network sharing operators, collect statistics on actual bandwidth resource information, and perform service balancing between base stations according to the statistical actual bandwidth resource information or determine a new bandwidth correction value,
wherein the new bandwidth correction value is for use in correction of the bandwidth occupancy information of the network sharing operators within a next scheduling opportunity.

7. The apparatus according to claim 6, wherein the sharing module is a sharing sub-module embedded into the scheduling module.

8. A network sharing system, comprising a base station and a sharing apparatus,
wherein the base station comprises the network sharing apparatus according to claim 7; and
the sharing apparatus is configured to correct bandwidth occupancy information of network sharing operators and perform service balancing between base stations according to statistical actual bandwidth resource information.

9. A computer storage medium having stored therein computer executable instructions for executing the method according to any one of claims 1 to 5.

## Patentansprüche

1. Verfahren zur gemeinsamen Netzwerknutzung, umfassend:
Erfassen von Zugriffsbenutzerinformationen und Bandbreitebelegungsinformationen von Betreibern mit gemeinsamer Netzwerknutzung, und Bestimmen von Dienstausführungsablaufinformationen von Zugriffsbenutzern gemäß den Zugriffsbenutzerinformationen (S101), wobei die Zugriffsbenutzerinformationen angeforderte Dienstinformationen von Zugriffsbenutzern und beigefügte Betreiberinformationen umfassen, wobei die angeforderten Dienstinformationen von Zugriffsbenutzern sich auf Attributinformationen von angeforderten Diensten beziehen, einschließlich einer Dienstverzögerung, einer Dienst-Zuweisungs- und Beibehaltungspriorität (ARP) und einer Dienstpriorität;
Korrigieren der Bandbreitebelegungsinformationen der Betreiber mit gemeinsamer Netzwerknutzung unter Benutzung eines Bandbreitekorrekturwertes einer vorherigen Planungsgelegenheit (S102), worin der Bandbreitekorrekturwert zwei Informationsebenen umfasst, eine erste Information, die angibt, ob verbleibende Bandbreiteressourcen, die dann erhalten werden, nachdem Bandbreiten eines gewissen Betreibers in der vorherigen Planungsgelegenheit innerhalb einer gewissen Planungsgelegenheit nicht gänzlich zugewiesen sind, von anderen Betreibern benutzt werden dürfen; und eine zweite Information, die sich auf einen Unterschied zwischen Bandbreiteressourcen, die von einem gewissen Betreiber tatsächlich belegt sind, und einer oberen Grenze von verfügbaren Bandbreiten des gewissen Betreibers unter der Voraussetzung, dass verbleibende Bandbreiteressourcen gegenseitig zwischen Betreibern belegt werden dürfen, bezieht;
Zuweisen von Bandbreiteressourcen gemäß den Dienstausführungsablaufinformationen der Zugriffsbenutzer und den korrigierten Bandbreitebelegungsinformationen der Betreiber mit gemeinsamer Netzwerknutzung (S103); und
Sammeln von Statistiken über die tatsächlichen Bandbreiteressourceninformationen und Durchführen von Dienstausgleichung zwischen Basisstationen gemäß den statistischen tatsächlichen Bandbreiteressourceninformationen, oder Bestimmen eines neuen Bandbreitekorrekturwertes für die Korrektur der Bandbreitebelegungsinformationen der Betreiber mit gemeinsamer Netzwerknutzung innerhalb einer nächsten Planungsgelegenheit (S104).

2. Verfahren nach Anspruch 1, worin das Erfassen der Zugriffsbenutzerinformationen sich auf das Erfassen von beigefügten Betreiberinformationen der Zugriffsbenutzer und von angeforderten Dienstinformationen bezieht.

3. Verfahren nach Anspruch 2, worin das Bestimmen der Dienstausführungsablaufinformationen der Zugriffsbenutzer sich spezifisch auf das Bestimmen der Dienstausführungsablaufinformationen der Zugriffsbenutzer gemäß den erfassten Zugriffsbenutzerinformationen und den Dienstausführungsablaufinformationen der Betreiber mit gemeinsamer Netzwerknutzung bezieht.

4. Verfahren nach Anspruch 1, worin das Bestimmen des neuen Bandbreitekorrekturwertes umfasst:
Sammeln von Statistiken über tatsächlich belegte Bandbreiteressourceninformationen aller Zugriffsbenutzer, die den Betreibern mit gemeinsamer Netzwerknutzung zugehörig sind; und
Bestimmen eines Bandbreitekorrekturwertes gemäß den tatsächlich belegten Bandbreiteressourceninformationen aller Zugriffsbenutzer, die den Betreibern mit gemeinsamer Netzwerknutzung zugehörig sind, und den Bandbreitebelegungsinformationen der Betreiber mit gemeinsamer Netzwerknutzung.

5. Verfahren nach Anspruch 1, worin die Bandbreitebelegungsinformationen ein Bandbreitebelegungswert oder ein Bandbreitebelegungsanteil sind.

6. Vorrichtung zur gemeinsamen Netzwerknutzung, umfassend:
ein Erfassungsmodul, das dazu eingerichtet ist, Zugriffsbenutzerinformationen und Bandbreitebelegungsinformationen von Betreibern mit gemeinsamer Netzwerknutzung zu erfassen, und Dienstausführungsablaufinformationen von Zugriffsbenutzern gemäß den Zugriffsbenutzerinformationen zu bestimmen, wobei die Zugriffsbenutzerinformationen angeforderte Dienstinformationen von Zugriffsbenutzern und beigefügte Betreiberinformationen umfassen, wobei die angeforderten Dienstinformationen von Zugriffsbenutzern sich auf Attributinformationen von angeforderten Diensten beziehen, einschließlich einer Dienstverzögerung, einer Dienst-Zuweisungs- und Beibehaltungspriorität (ARP) und einer Dienstpriorität;
ein gemeinsames Nutzungsmodul, das dazu eingerichtet ist, die Bandbreitebelegungsinformationen der Betreiber mit gemeinsamer Netzwerknutzung unter Benutzung eines Bandbreitekorrekturwertes einer vorherigen Planungsgelegenheit zu korrigieren, worin der Bandbreitekorrekturwert zwei Informationsebenen umfasst, eine erste Information, die angibt, ob verbleibende Bandbreiteressourcen, die dann erhalten werden, nachdem Bandbreiten eines gewissen Betreibers in der vorherigen Planungsgelegenheit innerhalb einer gewissen Planungsgelegenheit nicht gänzlich zugewiesen sind, von anderen Betreibern benutzt werden dürfen; und eine zweite Information, die sich auf einen Unterschied zwischen Bandbreiteressourcen, die von einem gewissen Betreiber tatsächlich belegt sind, und einer oberen Grenze von verfügbaren Bandbreiten des gewissen Betreibers unter der Voraussetzung, dass verbleibende Bandbreiteressourcen gegenseitig zwischen Betreibern belegt werden dürfen, bezieht; und
ein Planungsmodul, das dazu eingerichtet ist, Bandbreiteressourcen gemäß den Dienstausführungsablaufinformationen der Zugriffsbenutzer und den korrigierten Bandbreitebelegungsinformationen der Betreiber mit gemeinsamer Netzwerknutzung zuzuweisen, Statistiken über tatsächliche Bandbreiteressourceninformationen zu sammeln und Dienstausgleichung zwischen Basisstationen gemäß den statistischen tatsächlichen Bandbreiteressourceninformationen durchzuführen, oder einen neuen Bandbreitekorrekturwert zu bestimmen,
worin der neue Bandbreitekorrekturwert bei der Korrektur der Bandbreitebelegungsinformationen der Betreiber mit gemeinsamer Netzwerknutzung innerhalb einer nächsten Planungsgelegenheit benutzt werden soll.

7. Vorrichtung nach Anspruch 6, worin das gemeinsame Nutzungsmodul ein gemeinsames Nutzungs-Untermodul ist, das im Planungsmodul eingebettet ist.

8. System zur gemeinsamen Netzwerknutzung, umfassend eine Basisstation und eine Vorrichtung zur gemeinsamen Nutzung,
worin die Basisstation die Vorrichtung zur gemeinsamen Netzwerknutzung nach Anspruch 7 umfasst; und
die Vorrichtung zur gemeinsamen Nutzung dazu eingerichtet ist, Bandbreitebelegungsinformationen von Betreibern mit gemeinsamer Netzwerknutzung zu korrigieren und Dienstausgleichung zwischen Basisstationen gemäß statistischen tatsächlichen Bandbreiteressourceninformationen durchzuführen.

9. Computerspeichermedium, auf dem computerausführbare Anweisungen zur Ausführung des Verfahrens nach einem der Ansprüche 1 bis 5 gespeichert sind.

## Revendications

1. Procédé de partage de réseau, comprenant :
l'acquisition des informations d'utilisateur d'accès et des informations d'occupation de bande passante d'opérateurs de partage de réseau, et la détermination des informations de séquence d'exécution de service d'utilisateurs d'accès en fonction des informations d'utilisateur d'accès (S101), les informations d'utilisateur d'accès comprenant des informations de service demandées par l'utilisateur d'accès et des informations d'opérateur associées, les informations de service demandées par l'utilisateur d'accès se référant à des informations d'attribut de services demandés, y compris un retard de service, une priorité d'attribution et de conservation de service ARP, et une priorité de service ;
la correction des informations d'occupation de bande passante des opérateurs de partage de réseau en utilisant une valeur de correction de bande passante d'une opportunité d'ordonnancement précédente (S102), où la valeur de correction de bande passante contient deux niveaux d'informations, une première information qui indique si les ressources de bande passante restantes, qui sont obtenues après que les bandes passantes d'un certain opérateur ne sont pas complètement attribuées dans l'opportunité d'ordonnancement précédente dans une certaine opportunité d'ordonnancement, sont autorisées à être utilisées par d'autres opérateurs ;
et une seconde information qui fait référence à une différence entre les ressources de bande passante réellement occupées par un certain opérateur et une limite supérieure des bandes passantes disponibles de l'opérateur à la condition que les ressources de bande passante restantes sont autorisées à être mutuellement occupées entre les opérateurs ;
l'attribution des ressources de bande passante en fonction des informations de séquence d'exécution de service des utilisateurs d'accès et des informations d'occupation de bande passante corrigées des opérateurs de partage de réseau (S 103) ; et
la collecte de statistiques sur des informations de ressources de bande passante réelles, et la réalisation d'un équilibrage de service entre des stations de base en fonction des informations de ressources de bande passante réelles statistiques, ou la détermination d'une nouvelle valeur de correction de bande passante pour la correction des informations d'occupation de bande passante des opérateurs de partage de réseau dans une opportunité d'ordonnancement suivante (S104).

2. Procédé selon la revendication 1, où l'acquisition des informations d'utilisateur d'accès se réfère à l'acquisition d'informations d'opérateur attachées des utilisateurs d'accès et d'informations de service demandées.

3. Procédé selon la revendication 2, où la détermination des informations de séquence d'exécution de service des utilisateurs d'accès se réfère spécifiquement à la détermination des informations de séquence d'exécution de service des utilisateurs d'accès en fonction des informations d'utilisateur d'accès acquises et aux informations de séquençage d'exécution de service des opérateurs de partage de réseau.

4. Procédé selon la revendication 1, où la détermination de la valeur de correction de bande passante comprend :
le recueil des statistiques sur les ressources de bande passante réellement occupées de tous les utilisateurs d'accès subordonnés aux opérateurs de partage de réseau ; et
la détermination d'une valeur de correction de bande passante en fonction des informations de ressources de bande passante réellement occupées de tous les utilisateurs d'accès subordonnés aux opérateurs de partage de réseau et des informations d'occupation de bande passante des opérateurs de partage de réseau.

5. Procédé selon la revendication 1, où les informations d'occupation de bande passante sont une valeur d'occupation de bande passante ou une proportion d'occupation de bande passante.

6. Appareil de partage de réseau, comprenant :
un module d'acquisition configuré pour acquérir des informations d'utilisateur d'accès et des informations d'occupation de bande passante d'opérateurs de partage de réseau, et déterminer des informations de séquence d'exécution de service d'utilisateurs d'accès en fonction des informations d'utilisateur d'accès, les informations d'utilisateur d'accès comprenant des informations de service demandées par l'utilisateur d'accès et des informations d'opérateur associées, les informations de service demandées par l'utilisateur d'accès se référant à des informations d'attribut de services demandés, y compris un retard de service, une priorité d'allocation et de conservation de service ARP, et une priorité de service ;
un module de partage configuré pour corriger les informations d'occupation de bande passante des opérateurs de partage de réseau en utilisant une valeur de correction de bande passante d'une opportunité d'ordonnancement précédente, où la valeur de correction de bande passante contient deux niveaux d'informations, une première information qui indique si les ressources de bande passante restantes, qui sont obtenues après que les bandes passantes d'un certain opérateur ne sont pas complètement attribuées dans l'opportunité d'ordonnancement précédente dans une certaine opportunité d'ordonnancement, sont autorisées à être utilisées par d'autres opérateurs ; et une seconde information qui fait référence à une différence entre les ressources de bande passante réellement occupées par un certain opérateur et une limite supérieure des bandes passantes disponibles de l'opérateur à la condition que les ressources de bande passante restantes sont autorisées à être mutuellement occupées entre les opérateurs ; et
un module d'ordonnancement configuré pour allouer des ressources de bande passante en fonction des informations de séquence d'exécution de service des utilisateurs d'accès et les informations d'occupation de bande passante corrigées des opérateurs de partage de réseau, collecter des statistiques sur les informations de ressources de bande passante réelles, et effectuer un équilibrage de service entre les stations de base en fonction des informations de ressources de bande passante réelles statistiques ou déterminer une nouvelle valeur de correction de bande passante,
où la nouvelle valeur de correction de bande passante est destinée à être utilisée dans la correction des informations d'occupation de bande passante des opérateurs de partage de réseau dans une opportunité d'ordonnancement suivante.

7. Appareil selon la revendication 6, où le module de partage est un sous-module de partage intégré dans le module d'ordonnancement.

8. Un système de partage de réseau, comprenant une station de base et un appareil de partage,
où la station de base comprend l'appareil de partage de réseau selon la revendication 7 ; et
l'appareil de partage est configuré pour corriger des informations d'occupation de bande passante d'opérateurs de partage de réseau et effectuer un équilibrage de service entre des stations de base en fonction d'informations de ressources de bande passante réelles statistiques

9. Support de stockage informatique où sont stockées des instructions exécutables par ordinateur pour exécuter le procédé selon l'une quelconque des revendications 1 à 5.
